# EUROPEAN PATENT APPLICATION

(11) **EP 1 705 932 A1**
(43) Date of publication of application: **27.09.2006**
(21) Application number: 05290485.1
(22) Date of filing: 03.03.2005
(51) Int. Cl.: H04Q 7/22, H04Q 7/38

(54) **Proximity service**

(71) Applicant: ALCATEL, 75008 Paris (FR)
(72) Inventor: Duspiva, Matthias, 71229 Leonberg (DE); Rupp, Stephan, 74354 Besigheim (DE)
(74) Representative: Zinsinger, Norbert

(57) **Abstract**

Method for providing subscribers (111,211) of different wireless telecommunication networks (1,2), e.g., a GSM network and a WLAN network, with a proximity service as well as a system for executing this method. A first subscriber (111) communicating via a first wireless telecommunication network (1) wants to be notified when he is near to another subscriber (211) communicating via a second wireless telecommunication network (2). The location of the subscribers (111,211) is determined by the central network servers (10,20) by means of the IDs of the network cells and network access points. A proximity server (30), comprising a messaging unit (32) and a geomatching unit (33), is adapted to provide the proximity service across the different networks. Pseudonyms for the subscribers' names and geo-pseudonyms for locations are applied to protect the privacy of the traced subscribers (111,211).

## Description

The invention relates to a method for providing a proximity service as well as a proximity server for executing the method.

The cellular design of wireless telecommunication networks based on the GSM or UMTS technology provides a simple means to determine the geographic location of a subscriber of such a network (GSM = Global System for Mobile Communication; UMTS = Universal Mobile Telecommunication System). This has led to so-called Location Based Services (= LBS) provided by operators of wireless telecommunication networks.

US 6 813 501 B2 provides a discussion of the different coverage areas of currently available wireless telecommunication networks and its consequence for LBS. While in cellular telecommunication networks like GSM networks, the individual coverage areas, i.e., the cells can be several kilometres across, the individual coverage areas of other wireless communications systems, for example a Bluetooth system or a WLAN network (WLAN = Wireless Local Area Network), may be confined to a single room or space in a building and may size in the region of tens of metres. All these different wireless telecommunication networks co-exist usually without a defined correlation among each other.

LBS, whose accuracy is inherently connected to the cell size of the used network, offer a wide spectrum of applications for wireless communication devices, such as a cellular phone. One popular application, known under names like "Friend Zone" or "Buddy Alert", enables a subscriber to detect other subscribers nearby.

US 2004/0198398 A1 describes a system for detecting proximity between mobile device users. Each mobile device knows its own location information, and a user of a mobile device wishes to contact other users of mobile devices in dependance of their relative locations. In particular, the system determines whether a pair of pre-specified "friends" is getting closer than a certain distance to each other and may automatically alert, or notify them whenever such an event occurs. A natural scenario for this case is of people carrying cellular phones who want to be aware of other people, such as business colleagues, customers, family and friends, nearby.

These proximity applications are restricted to subscribers of the same telecommunication network, e.g., operated under the GSM standard, or different telecommunication networks of the same technology and of co-operating operators. LBS are not interoperable between different network architectures like between a GSM system, a Bluetooth system and a WLAN.

It is the object of the present invention to improve the provision of proximity services.

The object of the present invention is achieved by a method of providing subscribers with a proximity service, wherein the method comprises the steps of storing geographical position and extension data of cells of different wireless telecommunication networks in a data base, receiving presence notifications and associated cell information of mobile telecommunication devices, the cell information indicating a cell of a wireless telecommunication network the mobile telecommunication device is located in, mapping cell information referring to different wireless telecommunication networks to geographical areas based on interrogating the data base, matching the geographical areas at a central proximity server and generating a proximity table of subscribers of different wireless telecommunication networks located in proximity to each other, and transmitting proximity information to a subscriber based on the proximity table.

The object of the present invention is further achieved by a system for providing subscribers with a proximity service, wherein the system comprises one or more servers for receiving presence notifications and associated cell information of mobile telecommunication devices, the cell information indicating a cell of a wireless telecommunication network the mobile telecommunication device is located in, a data base for storing geographical position and extension data of cells of different wireless telecommunication networks, and a central proximity server comprising a geo-matching unit and a messaging unit, the geo-matching unit adapted for mapping cell information referring to different wireless telecommunication networks to geographical areas based on interrogating the data base, matching the geographical areas, and generating a proximity table of subscribers of different wireless telecommunication networks located in proximity to each other and the messaging unit adapted for transmitting proximity information to a subscriber based on the proximity table.

Said cells of wireless telecommunication networks are constituted as individual coverage areas served by individual base stations, hot spots, and access points, respectively. The term cell here is not meant to be limited to the coverage area of a cellular mobile telephone network served by a base station, like a GSM network; it is meant here to comprise also the much smaller coverage areas of nearness-based Bluetooth and WLAN networks which are usually served by hot spots and access points.

Each coverage area, in short: cell, is usually identified within the respective wireless telecommunication networks by a unique cell ID. In the case of cellular telecommunication networks like GSM networks, the individual cells usually are immediately neighbouring each other, partly overlapping, thus enabling a continuous coverage of a wide geographical range. ln the case of nearness-based telecommunication networks like a WLAN hot spot, individual cells usually are located in significant distance to each other, e.g., in certain areas of public buildings. A WLAN hot spot may be accessible in a waiting hall of an airport, and the next available WLAN hot spot may be in the lounge of a hotel close to the airport. Similar conditions apply to other nearness-based telecommunication networks like Bluetooth.

The use of the invention enables subscribers of different wireless telecommunication networks to use a proximity service with respect to each other. A subscriber not only is informed where other subscribers are, he can also find out when he is in proximity to another subscriber and may decide to meet him. The proximity server provides the functionality for matching the cell ranges of different wireless telecommunication networks. Thus, the invention overcomes the drawback of state-of-the-art networks where proximity services are limited to subscribers of the same network or cooperating networks of the same technology.

Further advantages are achieved by the embodiments of the invention indicated by the dependent claims.

According to a preferred embodiment of the invention, the proximity service is provided to subscribers of different wireless telecommunication networks with different cell architecture and based on different technology. The invention enables subscribers of , e.g., a GSM network and a WLAN network, to use the proximity service with respect to each other. Therefore subscribers of all kinds of wireless telecommunication networks like, for example, cellular GSM networks, WLAN hot spots, and Bluetooth access points can determine the proximity to each other.

According to another preferred embodiment of the invention, the proximity service is provided to subscribers of wireless telecommunication networks and wire-line telecommunication networks. For example, a subscriber of a fixed wire-line telephone network, e.g., a PSTN network, an ISDN network, or an IP network where access to is provided by an ISP, may be informed when a familiar person subscribed to a wireless telephone network and carrying a mobile phone comes geographically close to the subscriber of the fixed telephone network (PSTN = Public Switched Telephone Network; ISDN = Integrated Services Digital Network; ISP = Internet Service Provider). Or a user of a mobile phone may be informed when he is near a fixed network access point of a friend of his, such providing the user with a limited navigation service.

It is possible that a subscriber assigns a geographical pseudonym, a so-called geo-pseudonym to a cell in order to veil his geographical position with regard to unwanted persons. The geo-pseudonym is understandable only to persons who have a relatively close relationship with the subscriber, e.g., family, friends or colleagues. Therefore, the threat to the privacy of the subscriber potentially posed by LBS is averted. For example, the geo-pseudonym "pub" may indicate to the subscriber's friends a specific pub the subscriber usually visits in this area. Although the cell architecture usually allows only a low geographic accuracy, it is sufficient to locate the subscriber because his friends know his habits. To other people, "pub" is a general description and does not guide them to a specific location. Therefore, the subscriber's privacy is protected. The same subscriber may visit also a second pub in a different quarter of town and he may have assigned the same geo-pseudonym "pub" also to this second pub. Then a subscriber's friend may still be able to locate the subscriber as he knows the subscriber's habits, i.e., the specific attended pubs located in different quarters of town.

The assignment of a geo-pseudonym to a location is executed by transmitting a corresponding message to a respective server when the subscriber is at this location. To be more accurate, the geo-pseudonym is not assigned to the location itself but to the network cell and the access point, respectively, where the location is situated. Then the server can assign the geo-pseudonym to the ID of the specific cell, the hot spot, and the access point, respectively, the subscriber's message is received from.

It is further possible that a subscriber adopts a personal pseudonym to veil his identity with regard to unwanted persons. A subscriber with the real name "Alice" may adopt the pseudonym "Mona Lisa" when using the proximity service. A subscriber may also use different pseudonyms for different proximity groups which she has established in her mobile device. For the group "family" a subscriber may adopt the pseudonym "Mom" while for her leisure painting group she has chosen "Mona Lisa" as a pseudonym.

A subscriber may administrate an arbitrary number of proximity groups, e.g., family, friends at a pub, job colleagues, hobby colleagues, etc. Each proximity group comprises the subscriber and one or more other group members. For each proximity group, the subscriber may use separate personal pseudonyms and separate geo-pseudonyms. For example, a subscriber may have assigned to a popular pub the pseudonym "bestbar" with regard to a first proximity group, and the pseudonym "club" with regard to a second proximity group. It is also possible that a group is admininstrated using different mobile devices, e.g., the group friends via a GSM mobile phone when on the road, and via a PDA when at WLAN hot spots (PDA = Personal Digital Assistant). Depending on the functionality of these devices, the subscriber may use for the same group different geo-pseudonyms and personal pseudonyms, dependent on the used mobile device.

According to a preferred embodiment of the invention, the subscriber who is provided with a proximity service receives information about the location of other subscribers in form of the pseudonyms chosen by the other subscribers and depending on the proximity group he has been assigned to. The proximity information can be displayed as text or symbols on a display or as an acoustic signal. The way this information is presented can depend on the group membership, the geo-pseudonym, the pseudonym, the used mobile communication device, etc. of the determined subscriber nearby. For example, different symbols or acoustic tones may be used.

The proximity service is preferably adapted to integrate into other LBS services. For example, a subscriber's mobile device may be easily switched between a presence mode, where the subscriber sees which other subscribers are online, and the proximity service. For reasons of separation from other LBS like the presence mode, the proximity mode in this context is adequately also referred to as RADAR mode (RADAR = Radio Detecting and Ranging).

With increasing availability of satellite navigation systems like, e.g., GPS and with increasing accuracy of location, it is further possible that the proximity service is extended to provide navigation (GPS = Global Positioning System). In this case, a first subscriber receives the true geographic coordinates, i.e., longitude, latitude, and possibly altitude, of another subscriber's proximity indication, e.g., the pub a friend of his is currently visiting. The coordinates may be used to navigate the first subscriber to the place indicated. The transmission of true geographic coordinates needs to be enabled for the specific geo-pseudonym of the target subscriber by the target subscriber, whereby the term "target subscriber" indicates the subscriber at the pub (= target) who has been localised by the first subscriber. This unveiling of the geo-pseudonym and its revokation can take place whenever the target subscriber wishes to and is indicated through a message to a corresponding control unit coupled to the used network.

In order to give a subscriber control over the use of his positional data, it is possible that a subscriber can only be detected via the proximity service if he has agreed to this service. For example, when a subscriber sends a request for proximity service in order to locate members of a proximity group set up on his mobile device, each member receives a message indicating that the subscriber tries to locate the respective member via a proximity service. Then the member can decide whether he agrees to being located or he rejects. In either case, the answer is processed in the proximity server and stored for further reference. It is preferable that the subscriber will be informed about the reply of the member. A subscriber can transmit an agreement to a proximity service and also its revokation whenever he wishes to. Thus, every subscriber is in full control of his data.

According to a further embodiment of the invention, a subscriber of a proximity group is informed when a person enters or leaves a proximity area. A subscriber can be subscribed at the same time to several proximity groups and simultaneously monitor the changes of the proximity information with regard to the different proximity groups. The proximity information is appropriately indicated by different ringing tones or icons, dependent on the detected and indicated subscriber, the proximity group, etc.

These as well as further features and advantages of the invention will be better appreciated by reading the following detailed description of exemplary embodiments taken in conjunction with accompanying drawings of which:
- Fig. 1: is a block diagram of a system for providing a subscriber with a proximity service according to a first embodiment of the invention.
- Fig. 2: shows a schematic proximity-related look-up table.

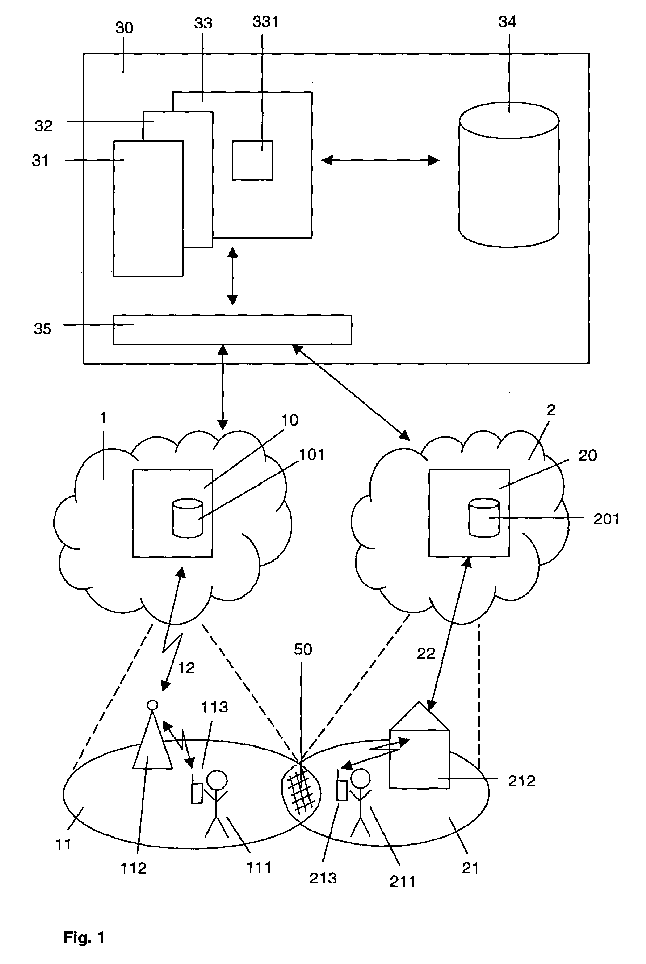

Fig. 1 is a schematic block diagram of a first embodiment of the present invention.

A first subscriber 111 subscribed to a GSM-based cellular telecommunication network 1 communicates via a wireless communication unit 113 like, e.g., a mobile phone. The subscriber 111 is currently located in a cell 11 which is defined by the coverage area of the base station, i.e., the antenna 112 and which is identified to the network carrier of the network 1 by a unique cell ID. A second subscriber 211, using a wireless communication unit 213 like, e.g., a WLAN notebook, is currently logged to a WLAN hot spot 21 provided in a hotel 212. The coverage area of the WLAN hot spot 21 overlaps with the cell 11 of the cellular telecommunication network 1, defining an overlap area 50. The hot spot 21 is part of a second network 2 and is identified within this second network 2 by a hot spot ID.

The first subscriber 111 has added the second subscriber 211 to a proximity group comprising a couple of friends. When the first subscriber 111 initiates the proximity service, a central network server 10 of the cellular telecommunication network 1 receives a message 12 from the first subscriber's 111 mobile phone 113. The message 12 comprises the cell ID of the cell 11 the first subscriber 111 is located in and a presence notification with identification information indicating the identity of the mobile phone 113. The central network server 10 authentifies the first subscriber 111 by means of this message 12 and assigns geographical position and extension data to the received cell lD, such mapping the cell number to the real world geography. This is achieved by looking up a data base 101 of the central network server 10 which contains a correlation table of all cell ID's with respect to geographic position and extension data, i.e., a specific geographic area. The correlation table between cell ID's and geographic area is usually administrated and updated by the network carrier. Since it allows to draw conclusions on the expansion of a network and other business-related information, the network carrier is inclined to keep this correlation table secret.

On log-in, the notebook 213 of the second subscriber 211 has transmitted a message 22 to a central network server 20 of the telecommunication network 2 the WLAN hot spot 21 is connected with. The message 22 comprises the lD of the hot spot 21 and a presence notification with identification information indicating the identity of the notebook 213. The central network server 20 authentifies the second subscriber 211 by means of this message 22 and assigns a geographical position and extension to the received lD of the hot spot 21, such mapping the lD to the real world geography. Again, this is achieved by looking up a confidential data base 201 of the central network server 20 which contains a correlation table of all hot spot ID's with respect to geographic position and extension data.

The wireless communication units 113, 213 can be any electronic devices which are adapted for communicating via a wireless communication network 1, 2, e.g., a cellular communication network as a GSM or UMTS network or a network comprising WLAN hot spots or Bluetooth access points.

The central network servers 10, 20 do not communicate with each other. They belong to different networks 1, 2 which vary in range, technology, protocol, network carrier, etc. Both central network servers 10, 20 transmit messages comprising the identifiers of the involved mobile devices 113, 213 and the corresponding geographic areas 11, 21 to a central proximity server 30. The proximity server 30 has been established by the network operators of the networks 1, 2 in order to provide a proximity service within the participating networks 1, 2.

The central proximity server 30, comprising a control unit 31, a messaging unit 32, a geo-matching unit 33, a data base 34, and an interface 35 is adapted to receive messages from the network servers 10, 20 and to control and manage the proximity service. The data base 34 stores a proximity-related look-up table, i.e., information concerning the subscribers 111, 211 of the proximity service, like the subscribers' 111, 211 name, the associated groups and group members, identifiers of the mobile devices used by the subscribers 111, 211, personal pseudonyms and geo-pseudonyms associated with the subscribers 111, 211, etc.

The interface 35 is adapted to receive and to transmit messages from/to the network servers 10, 20 and also from wireless communication devices. The messaging unit 32 is coupled to the geo-matching unit 33 which comprises a processor 331. The processor 331 of the geo-matching unit 33 is adapted to compute whether two geographic areas match to each other and have any overlapping area, respectively. Any auxiliary information can be stored in and retrieved from the data base 34 while the control unit 31 controls and manages the data flow, controls the computational work and manages the proximity service.

The servers 10, 20, 30 are composed of one or several interlinked computers, i.e., a hardware platform, a software platform basing on the hardware platform and several application programs executed by the system platform formed by the software and hardware platform. The servers 10, 20, 30 may be separate servers or may be realised as integrated servers combining two or more servers and their functions in separate server units. The functionalities of the servers 10, 20, 30 are provided by the execution of these application programs. The application programs or a selected part of these application programs constitute a computer software product providing a proximity service as described in the following, when executed on the system platform. Further, such computer software product is constituted by a storage medium storing these application programs or said selected part of application programs.

The control unit 31 looks up the subscriber-related data in the proximity-related look-up table and identifies the group members who have approved to participate in the proximity service and all the related attributes like used pseudonym, geo-pseudonyms associated with the transmitted geographic area, etc. If it is the first time the first subscriber 111 tries to locate the second subscriber 211, the second subscriber 211 is sent a message composed by the messaging unit 32 which informs him about the fact that he is going to be traced. In case the second subscriber agrees to provide the proximity information and wishes to enable the proximity service, he approves this to the messaging unit 32 by a suitable reply. The control unit 31 registers the approval of the second subscriber 211 with regard to the first subscriber 111 in the proximity-related look-up table kept in the data base 34.

ln this case, the control unit 31 forwards the geographic area data received from the central network servers 10, 20 to the geo-matching unit 32. The geo-matching unit 33 computes in its processor 332 whether the geographic areas described by the received geographic area data possess a common overlapping area 50. If so, the geo-matching unit 33 generates a proximity table of the subscribers located in proximity to each other and the messaging unit 32 transmits a message comprising proximity information to the requesting subcriber 111 whereby the message triggers the subscriber's 111 wireless communication device 113 to indicate via visual or acoustic means the corresponding proximity information.

Preferably, the proximity information is indicated to the subscriber 111 in form of personal pseudonyms and/or geo-pseudonyms in order to protect the privacy of the target subscriber 211 with regard to unwanted persons.

If there is no a common overlapping area 50, the geo-matching unit 33 reports the result to the control unit 31 which updates any related information in the data base 34. ln this case, no proximity information messages are sent to the subscriber 111.

The data base 34 which contains proximity-related data and the data bases 101, 201 which contain the correlation tables providing the correlation between cell IDs and geographical data may be arranged as a hierarchical data base with different access rights, functionalities and storage purposes. Also, the data bases 34, 101, 201 may be arranged in a multi-layered or one-level manner, consisting of several data bases in a network-like structure.

In case the target subscriber 211 has approved that the geographic coordinates of his current cell be disclosed, the proximity service may be extended to serve as a navigation service. Then the requesting subscriber 111 may receive the true geographic coordinates of the current location of the target subscriber 211. The coordinates allow the requesting subscriber to locate the target subscriber with a precision depending on the extension of the cell and the accuracy of the location information. The accuracy of the location information can be significantly enhanced with the aid of a satellite navigation system like, e.g., GPS, GLONASS, or Galileo.

A slightly different workflow will be encountered if the network operators have agreed to provide the correlation tables of the correlation between the ID's of the coverage areas, i.e., cells, hot spots and access points, and the corresponding geographic positions and areas, and to gather this information at a central site, the proximity server 30. This agreement may be achieved if the network operators are sure that their data are encrypted or accessible at the proximity server 30 in a transparent way by authentified persons only.

Then the central network servers 10, 20 forward the cell and hot spot ID's received from the wireless communication devices 113, 213 to the interface 35 of the proximity server 30. They may also forward the identifiers of the wireless communication devices 113, 213 to the proximity server 30 or they may alternatively assign and authentify the subscribers 113, 213 with the aid of their data bases 101, 201 and only forward the subscribers' identities to the proximity server 30.

It is possible that the network servers 10, 20 and the proximity server 30 are realised as one integrated server providing all functions of the proximity system and the networks, or that the proximity server 30 is integrated into one of the network servers 10, 20.

The control unit 31 forwards the cell ID and the hot spot lD received from the central network servers 10, 20 to the geo-matching unit 33 where the lD's are correlated with true geographic data, i.e., position and extension with the aid of the correlation tables of the correlation between cell ID's and geographic area provided by the network operators. The correlation tables are stored in the data base 34. As already described above, the processor 331 of the geo-matching unit 33 computes whether the geographic areas where the subscribers are located match, i.e., whether they possess an overlapping region 50. Depending on the result, the geo-matching unit 33 generates a proximity table and the messaging unit 32 transmits a message comprising proximity information from the proximity server 30 to the requesting subscriber 111 or not.

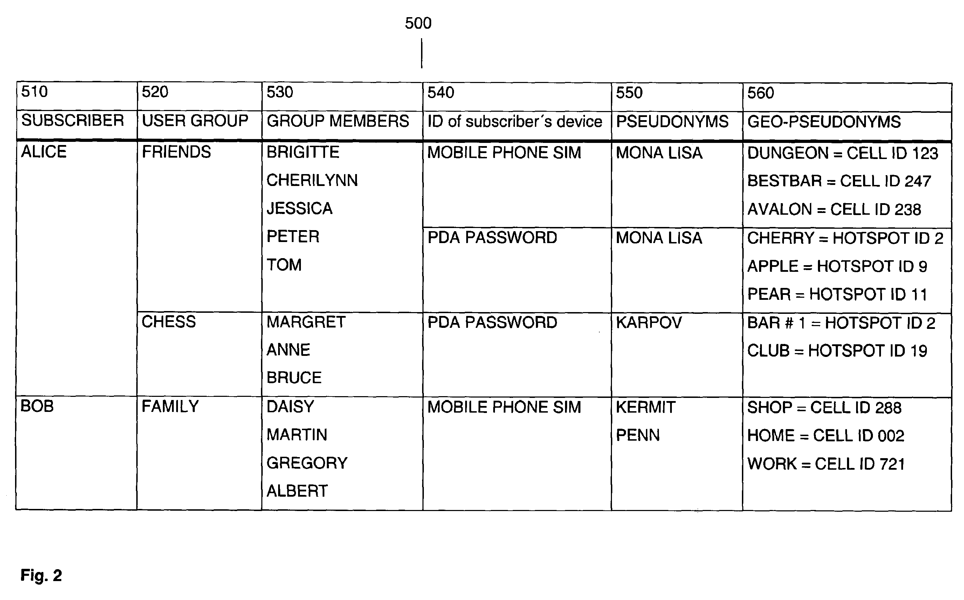

Fig. 2 is a diagram illustrating the exemplified content of the proximity-related look-up table.

The proximity-related look-up table 500 is kept in the data base 34 of the proximity server 30. It is consulted by the control unit 31, the messaging unit 32, and the geo-matching unit 33 in order to determine subcriber-related proximity data. It is kept up-dated by the control unit 31 based on the messages concerning the proximity service received via the central network servers 10, 20 from the proximity service subscribers 111, 211.

It contains in the first column 510 the subscribers of the proximity service, i.e., Alice and Bob. The second column 520 lists, sorted with regard to the subscribers, the proximity groups the subscribers have established, and in column 530 the respective group members of the proximity groups. For example, the subscriber Alice has established a group called "friends" and a group called "chess" which is her leisure chess player group. The group "friends" consists of five other subscribers plus Alice, the group "chess" consists of three other subscribers plus Alice.

In column 540 are listed the identifiers of the mobile communication devices used by the subscribers when using the proximity service. For example, Alice uses a mobile phone and a PDA for the group "friends" while she uses only a PDA when online for her chess partners. The identifier of the mobile phone is the SIM, for the PDA it is the password to enter the Internet (SIM = Subscriber Identity Module). So Alice tries to locate the members of the group friends via a GSM mobile phone when she is on the road, and via a PDA when she is logged in at WLAN hot spots.

Column 550 lists the personal pseudonyms, the subscriber wants to use instead of her real world name. Alice wants to be indicated to her friends by the pseudonym "Mona Lisa" while she has chosen the pseudonym "Karpov" with regard to her chess partners.

Column 560 lists the geo-pseudonyms, the subscriber wants to use instead of his real world geographic coordinates. When the proximity server 30 receives a cell ID, it is possible with the aid of the proximity-related look-up table 500 to correlate this cell ID with a geo-pseudonym. In case the cell IDs are considered confident data and not released by the network operators, the proximity server 30 does not receive a cell ID but corresponding geographic position and extension data since the correlation between cell ID and geographic area data is executed within the central network servers 10, 20 of the networks 1, 2. Then the column 560 will not contain the geo-pseudonyms and the correlated cell ID's but the geo-pseudonyms and the correlated geographic area data.

For example, when Alice is traced by a member of her group "friends", e.g., by Cherilynn, and when she is online via her mobile phone, she wants to be indicated to Cherilynn by her pseudonym "Mona Lisa" and - depending where she currently is - by different geographic pseudonyms. It is possible that she has assigned to her working place, which is located within a cell with cell ID 123, the geo-pseudonym "dungeon". To her favourite cafe, located within a cell with cell ID 247, she has assigned the geo-pseudonym "bestbar", and to her home, located within a cell with cell ID 238, she has assigned the geo-pseudonym "Avalon".

Similarly, when Alice is at work, she is online with her PDA via a WLAN hot spot with hot spot ID 2. Again, she will be indicated to her friends by her pseudonym "Mona Lisa", but for the use of the PDA, she has assigned to her working place the geo-pseudonym "cherry". She often attends a hotel lounge using her PDA, either to meet friends or to play chess with one of her chess partners. Therefore, she has assigned to the same hotel lounge, providing a hot spot with ID 9, two different geo-pseudonyms. With regard to her friends, she has assigned the geo-pseudonym "apple" for the group "friends". To her chess partners, she has assigned the geo-pseudonym "Bar #1". Moreover, she will be indicated by the personal pseudonym "Karpov" to her chess partners.

It becomes clear that a subscriber has the possibility to use different or identical pseudonyms and geo-pseudonyms with regard to different groups. This enables a multitude of auxiliary services like, e.g., different ring tones or symbols for the indication of subscribers, depending on the location and the group of the subscriber.

## Claims

1. A method of providing subscribers (111, 211, 510, 530) with a proximity service,
**characterised in**
**that** the method comprises the steps of:
storing geographical position and extension data of cells (11, 21) of different wireless telecommunication networks (1, 2) in a data base (34, 101, 201);
receiving presence notifications (12, 22) and associated cell information of mobile telecommunication devices (113, 213), the cell information indicating a cell (11, 21) of a wireless telecommunication network (1, 2) the mobile telecommunication device (113, 213) is located in;
mapping cell information referring to different wireless telecommunication networks (1, 2) to geographical areas based on interrogating the data base (34, 101, 201);
matching the geographical areas at a central proximity server (30) and
generating a proximity table of subscribers (111, 211, 510, 530) of different wireless telecommunication networks (1, 2) located in proximity to each other; and
transmitting proximity information to a subscriber (111, 211, 510, 530) based on the proximity table.

2. The method of claim 1,
**characterised in**
**that** the central proximity server (30) generates a proximity table of subscribers (111, 211, 510, 530) of wireless telecommunication networks (1, 2) using different access technologies, in particular of WLAN, Bluetooth and cellular phone networks.

3. The method of claim 1,
**characterised in**
**that** the central proximity server (30) generates a proximity table of subscribers (111, 211, 510, 530) of wireless telecommunication and fixed telecommunication networks.

4. The method of claim 1,
**characterised in**
**that** the method comprises the further steps of
assigning subscriber specific geo-pseudonyms (560) to cells (11, 21) of wireless telecommunication networks (1, 2) and/or to geographical areas;
determining one or more geo-pseudonyms (560) assigned to the present positions of subscribers (111, 211, 510, 530) located in proximity to each other; and
transmitting to one or more of said subscribers (111, 211, 510, 530) the determined one or more geo-pseudonyms (560) of the others of said subscribers (111, 211, 510, 530) as proximity information.

5. The method of claim 1,
**characterised in**
**that** the method comprises the further steps of
assigning personal pseudonyms (550) to subscribers (111, 211, 510, 530) and
transmitting one or more personal pseudonyms (550) as proximity information to a subscriber (111, 211, 510, 530).

6. The method of claim 1,
**characterised in**
**that** the method comprises the further steps of
defining two or more user groups (520), each user group having two or more subscribers (111, 211, 510, 530),
assigning for a single subscriber (111, 211, 510) two or more user group specific geo-pseudonyms (560) to a single cell (11, 21) of a wireless telecommunication network (1, 2) or to a single geographical area,
matching the user group's subscribers (111, 211, 510, 530) located in proximity to each other to determine the user group specific geo-pseudonyms (560) of one or more of said subscribers (111, 211, 510), and
transmitting the determined user group specific geo-pseudonyms (560) to one or more of the others of said subscribers (111, 211, 530).

7. The method of claim 1,
**characterised in**
**that** the proximity information transmitted to the subscriber (111, 211, 510, 530) comprises the true geographical coordinates corresponding to the position of a subscriber (111, 211, 510) for navigation.

8. The method of claims 1 or 7,
**characterised in**
**that** the proximity service and/or navigation service covers only subscribers (111, 211, 510, 530) who have indicated their approval to the provider of the service.

9. The method of claim 1,
**characterised in**
**that** the central proximity server (30) transmits proximity information to the subscriber (111, 211, 510, 530) whenever a change of the proximity of the subscriber (111, 211, 510, 530) with respect to other subscribers (111, 211, 510, 530) occurs.

10. A system for providing subscribers (111, 211, 510, 530) with a proximity service,
**characterised in**
**that** the system comprises one or more servers (10, 20, 30) for receiving presence notifications (12, 22) and associated cell information of mobile telecommunication devices (113, 213), the cell information indicating a cell (11, 21) of a wireless telecommunication network (1, 2) the mobile telecommunication device (113, 213) is located in, a data base (34, 101, 201) for storing geographical position and extension data of cells (11, 21) of different wireless telecommunication networks (1, 2), and a central proximity server (30) comprising a geo-matching unit (33) and a messaging unit (32), the geo-matching unit (33) adapted for mapping cell information referring to different wireless telecommunication networks (1, 2) to geographical areas based on interrogating the data base (34, 101, 201), matching the geographical areas, and generating a proximity table of subscribers (111, 211, 510, 530) of different wireless telecommunication networks (1, 2) located in proximity to each other and the messaging unit (32) adapted for transmitting proximity information to a subscriber (111, 211, 510, 530) based on the proximity table.
